# FASCICULE DE BREVET EUROPEEN

(11) **EP 2 049 441 B1**
(45) Date de publication et mention de la délivrance du brevet: **15.12.2010**
(21) Numéro de dépôt: 07823576.9
(22) Date de dépôt: 12.07.2007
(51) Int. Cl.: C02F 1/28, G01N 1/20, G01N 33/18, B01D 15/00

(54) **DISPOSITIF ET PROCÉDÉ POUR LA CAPTURE DE SUBSTANCES GÉNÉRATRICES D'ODEURS ET/OU DE GOÛTS PRÉSENTES DANS L'EAU CIRCULANT DANS UN RÉSEAU**
VORRICHTUNG UND VERFAHREN ZUR ERFASSUNG VON GERUCHS- UND/ODER GESCHMACKSERZEUGENDEN STOFFEN IM LEITUNGSWASSER
DEVICE AND METHOD FOR CAPTURING ODOUR- AND/OR TASTE-GENERATING SUBSTANCES PRESENT IN THE WATER FLOWING THROUGH A MAIN

(30) Priorité: 13.07.2006 FR 0652957
(43) Date de publication de la demande: 22.04.2009
(73) Titulaire: VEOLIA EAU - COMPAGNIE GENERALE DES EAUX, 75008 Paris (FR)
(72) Inventeur: FELIERS, Cédric, Qing Pu District Shanghai (CN); CORBI, Elise, F-78100 Saint Germain En Laye (FR); BENANOU, David, F-78500 Sartrouville (FR)
(74) Mandataire: Cardy, Sophie Marie
(86) Numéro de dépôt international: PCT/FR2007/051655
(87) Numéro de publication internationale: WO 2008/007032

(56) Documents cités:
- WO-A-93/24203
- FR-A- 2 407 730
- FR-A1- 2 760 837
- US-A- 5 256 287
- US-A- 5 868 933

## Description

L'invention concerne les réseaux de distribution d'eau, et en particulier la distribution d'eau potable. Plus précisément, l'invention concerne un dispositif et un procédé pour la capture de substances génératrices d'odeurs et/ou de goûts présentes dans l'eau circulant dans un réseau de distribution d'eau au niveau d'une canalisation.

Par le terme « capture », on entend un piégeage ou une extraction de substances génératrices d'odeurs et/ou de goûts en vue d'une caractérisation, et non d'une élimination systématique.

Dans ce domaine, il est obligatoire de contrôler, périodiquement ou en fonction des besoins, la qualité de l'eau, et tout particulièrement de l'eau potable, distribuée par un réseau.

Ces contrôles peuvent être notamment déclenchés lorsqu'un goût et/ou une odeur caractéristique ou non est détecté(e) par un particulier ou un exploitant du réseau de distribution.

Actuellement, lorsqu'un mauvais goût et/ou une mauvaise odeur est détecté(e) dans une eau, la procédure est la suivante :
- cette personne appelle le centre de réclamations associé au réseau de distribution d'eau ;
- un membre du personnel du réseau de distribution d'eau arrive sur le lieu de détection pour procéder à une mise en flacon d'un échantillon d'eau ;
- l'échantillon est alors expédié à un laboratoire d'analyses ;
- une extraction des substances génératrices du goût et/ou des odeurs en question est alors réalisée ;
- les substances extraites sont analysées.

Pour toutes ces étapes, on considère que l'extraction présente une durée de deux heures environ et l'analyse peut être effectuée dans les 24 heures suivantes.

Toutefois, il est connu que l'apparition des substances génératrices du goût et/ou des odeurs dans l'eau est un phénomène fugace dans le temps et que les seuils d'odeurs (ou de goût) des composés incriminés sont extrêmement faibles au regard de la sensibilité des matériels de détection couramment utilisés.

Par conséquent, la procédure décrite précédemment atteint très rapidement ses limites en termes d'efficacité.

En d'autres termes, cette procédure de l'art antérieur pose le problème de la conservation de l'intégralité de la « matrice » responsable du goût et de l'odeur d'une eau, entre le moment de prélèvement et celui de l'extraction en laboratoire ainsi que celui du temps souvent trop long entre la détection du goût par le dégustateur et le moment du prélèvement.

Toutefois, cette procédure est celle qui est habituellement employée afin de permettre de caractériser l'origine de l'odeur ou du goût de certaines eaux.

La présente invention a pour objectif de fournir un dispositif et un procédé permettant de surmonter les inconvénients de l'art antérieur et en particulier offrant la possibilité de pouvoir extraire les composés susceptibles de correspondre aux substances génératrices du goût et/ou de l'odeur directement sur le réseau d'eau.

En particulier, on cherche à proposer un dispositif et un procédé qui permettent d'extraire, au moins au moment choisi, et en continu, les molécules fugaces susceptibles de correspondre aux substances génératrices du goût et/ou de l'odeur, qui présente une simplicité et également une rapidité de mise en oeuvre, ainsi qu'une meilleure sensibilité du fait d'une accumulation des molécules odorantes avec le temps dans l'échantillon.

A cet effet, selon la présente invention, le dispositif pour la capture de substances génératrices d'odeurs et/ou de goûts présentes dans de l'eau circulant en continu dans un réseau de distribution d'eau au niveau d'une canalisation est caractérisé en ce qu'il comporte :
- des moyens de capture desdites substances, lesdits moyens de capture étant du type agissant par sorption ;
- au moins une chambre contenant les dits moyens de capture et apte à être traversée par la circulation de l'eau du réseau,
- et des moyens de liaison et de connexion hydrauliques entre ladite chambre et ladite canalisation.

De cette manière, on comprend que par le positionnement de ce dispositif, la capture en continu sur le réseau des substances génératrices d'odeurs et/ou de goûts présentes dans l'eau est possible à tout moment, régulièrement en vue de contrôler la qualité de l'eau sans mobiliser une personne pour l'extraction et donc limiter les coûts correspondants.

Cette solution présente aussi l'avantage supplémentaire, de permettre, outre la facilité de mise oeuvre, *in situ,* de réaliser l'extraction sur une longue période, ce qui permet de capturer les molécules responsables du goût et/ou de l'odeur de l'eau même lorsque leur apparition est fugace.

Par exemple la chambre permettant de réaliser le contact entre les moyens de capture et l'eau, est formée d'un tube ouvert à ses deux extrémités.

Globalement, grâce à la solution selon la présente invention, il est possible d'améliorer notablement les performances de la recherche de composés odorants visant à identifier les substances recherchées et, par conséquent, d'anticiper les actions visant à améliorer la qualité de l'eau.

Lesdits moyens de capture du type agissant par sorption comprennent au moins un support recevant au moins un élément de capture comprenant une couche de polydiméthylsiloxane (PDMS) (cette dernière pouvant recouvrir directement le support ou bien être située en surface d'un élément de capture lui-même monté sur le support).

Egalement, de préférence, ledit support comprend une portion aimantée, la portion aimantée étant recouverte d'une phase polymérique de type polydiméthylsiloxane (PDMS). Par exemple, cette portion aimantée est une barre en verre recouverte d'une phase polymérique de type polydiméthylsiloxane (PDMS) et dans laquelle est encapsulée un barreau magnétique.

Ce type de moyens de capture est présenté par les brevets EP1039288, EP1406077 et EP1610124 de la société GERSTEL SYSTEMTECHNIK GMBH & Co. KG.

Selon l'invention, afin de ne pas entacher les mesures ultérieures d'une erreur due aux matériaux utilisés par le dispositif et qui viennent en contact avec l'eau, on prévoit avantageusement que les matériaux formant le dispositif ne relarguent pas de composés susceptibles de gêner la capture des molécules odorantes. Par exemple, on utilise du polytétrafluoroéthylène (PTFE) ou Téflon (marque déposée), de l'acier inoxydable et/ou du verre.

Par ailleurs, selon une possibilité de mise en oeuvre préférentielle, lesdits moyens de liaison et de connexion hydrauliques comprennent un système de fixation rapide au robinet d'arrivée chez l'utilisateur.

Selon une autre possibilité de mise en oeuvre préférentielle, lesdits moyens de liaison et de connexion hydraulique comprennent des moyens de prise en charge entre la canalisation et ladite chambre et des moyens d'évacuation de l'eau hors de ladite chambre. Ainsi, on réalise un branchement d'eau sans interruption de débit dans la conduite de distribution d'une ville ou d'un immeuble. La prise en charge comprend par exemple un raccord formé essentiellement d'un collier de prise en charge et d'un robinet de prise en charge.

Egalement, on peut prévoir que lesdits moyens de prise en charge comprennent un robinet ou une vanne.

Il est possible de prévoir, avantageusement que lesdits moyens de prise en charge comprennent un système de fixation amovible, ce par quoi on peut remplacer la chambre de façon aisée.

Selon une autre disposition avantageuse, lesdits moyens de liaison et de connexion hydrauliques comprennent un débitmètre. Ce débitmètre permet de mesurer et, le cas échéant, de régler le débit de l'eau parcourant la chambre de contact.

Selon une variante de réalisation, le dispositif comporte, en outre, un système permettant d'injecter dans ladite chambre, en même temps que l'eau y circule, une solution liquide servant d'étalon. Cette solution liquide est une solution contenant une ou plusieurs molécules étalon identifiées et absorbables par le support de sorption, permettant la quantification de composés piégés.

Egalement, la présente invention, porte sur un procédé de capture de substances génératrices d'odeurs et/ou de goûts présentes dans de l'eau circulant en continu dans un réseau de distribution d'eau au niveau d'une canalisation en vue de la caractérisation desdites substances.

A cet effet, l'invention prévoit que ce procédé de capture est mis en oeuvre par le passage de l'eau du réseau dans une chambre contenant des moyens de capture desdites substances du type agissant par sorption et comprenant au moins un support recevant au moins un élément de capture comprenant une couche de polydiméthylsiloxane, ladite chambre étant reliée à la canalisation par des moyens de liaison et de connexion hydrauliques.

L'une ou plusieurs des dispositions suivantes est (sont) en outre de préférence adoptée(s) :
- on réalise en outre la mesure et/ou le réglage du débit de l'eau dans la chambre ;
- on réalise en outre, dans ladite chambre, en même temps que l'eau y circule, une injection d'une solution liquide servant d'étalon.

Dans le cadre de la présente invention, le procédé présenté est notamment mis en oeuvre et le dispositif présenté est notamment utilisé pour un réseau d'eau potable.

D'autres avantages et caractéristiques de l'invention ressortiront à la lecture de la description suivante faite à titre d'exemple et en référence aux dessins annexés dans lesquels :
- la figure 1 est une vue schématique générale en perspective du dispositif selon l'invention ;
- la figure 2 montre de façon plus détaillée la chambre et les moyens de capture des substances génératrices d'odeurs et/ou de goût présentes dans l'eau ;
- la figure 3 montre une vue de profil des moyens de capture contenus dans la chambre visible sur la figure 2 ;
- la figure 4 est une vue schématique générale en perspective d'une variante du dispositif selon l'invention ;
- les figures 5 à 7 montrent une autre variante de réalisation du dispositif conforme à l'invention, et
- les figures 8 et 9 illustrent deux autres solutions de réalisation de la variante conforme aux figures 5 à 7.

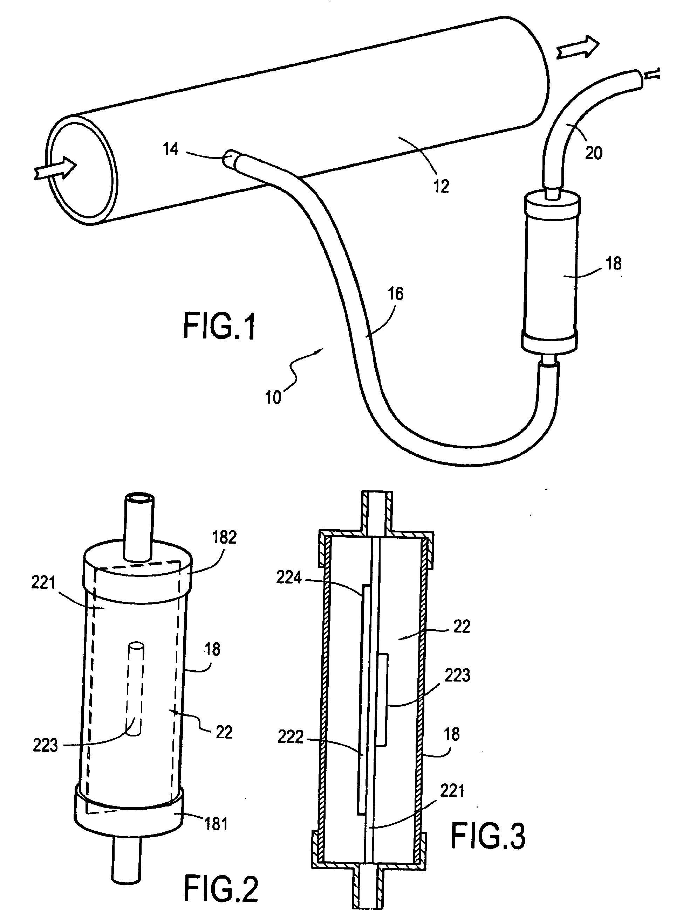

Sur la figure 1, on visualise un dispositif 10 conforme à la présente invention qui est monté sur une canalisation 12 du réseau, par exemple le réseau d'eau potable. À cet effet, des moyens de prise en charge 14 sont montés sur la canalisation 12 et sont reliés par un premier tuyau 16 à l'entrée d'une chambre 18 dont la sortie est reliée à un deuxième tuyau 20 pour l'évacuation de l'eau.

Ces moyens de prise en charge 14 et le premier tuyau 16 forment des moyens de liaison et de connexion hydraulique entre la chambre 18 et la canalisation 12 du réseau. Il faut noter que les moyens de prise en charge 14, qui sont généralement constitués d'un collier de prise en charge et d'un robinet de prise en charge, peuvent former un système de fixation amovible pour le montage du premier tuyau 16, et donc de la chambre 18, sur la canalisation 12.

Comme on le voit plus précisément sur la figure 2, la chambre 18 est un tube de section cylindrique, de préférence en en inox ou PTFE (polytétrafluoroéthylène), refermé à ses deux extrémités par un raccord 181,182 étanche qui permet de relier l'espace contenu dans cette chambre 18, respectivement au premier tuyau 16 et au deuxième tuyau 20.

En outre, la chambre 18 contient des moyens de capture 22 des substances génératrices des odeurs et/ou des goûts présents dans l'eau circulant dans la canalisation 12. À cet effet, l'exemple de réalisation représenté (voir les figures 2, 3, 6 et 7), ces moyens de capture 22 comprennent une plaque de support 221 à l'arrière de laquelle est montée une plaque aimantée 222 qui sert à maintenir l'élément de capture 223 agissant par sorption des substances génératrices des odeurs et/ou des goûts par effet magnétique, cet élément de capture 223 étant monté de l'autre côté de la plaque de support 221.

De préférence, la plaque de support 221 est réalisée en acier inoxydable et la plaque aimantée 222 est recouverte d'une couche 224 de Téflon ou PTFE.

Tous les matériaux de la chambre 18 et des moyens de capture 22 sont choisis afin de ne relarguer aucune substance susceptible de gêner la capture des molécules responsables de goût et/ou d'odeurs de l'eau: notamment on utilise de l'acier inoxydable, du verre et/ou du Téflon (marque déposée).

La plaque aimantée 222 est de préférence agrafée sur la plaque support 221 et sert essentiellement à fixer le support de sorption 223 comprenant la couche de polydiméthylsiloxane (PDMS).

Dans le cas illustré, l'élément de capture agissant par sorption 223 est un barreau magnétique traditionnel, vendu dans le commerce, qui se compose d'un aimant allongé enrobé dans une gaine de verre autour de laquelle est monté un manchon en polydiméthylsiloxane (PDMS) qui forme l'élément de sorption proprement dit.

A titre alternatif (cas non représenté), l'élément de capture 223 peut être formé d'une couche de polydiméthylsiloxane (PDMS) reliée par des moyens adhésif à la plaque de support 221, à la façon d'un « patch » (dans ce cas on a pas besoin ni de la plaque aimantée 222 ni de son éventuelle couche de PTFE 224).

On comprend donc que par le passage de l'eau provenant de la canalisation 12, dans la chambre 18, des substances, susceptibles de constituer celles responsables de goût et/ou d'odeurs de l'eau, vont pouvoir être capturées en continu par les moyens de capture 22. Cette capture est réalisée le temps que l'eau circule dans la chambre 18, en suivant le parcours depuis cette canalisation 12 via le premier tuyau 16, dans puis hors de la chambre 18, avant d'être évacuée par le deuxième tuyau d'évacuation 20 en direction d'un égout.

Il faut comprendre que la chambre 18 forme une chambre de contact qui peut comporter plusieurs éléments de capture agissant par sorption 223, disposés en série ou en parallèle.

Également, on peut prévoir de disposer plusieurs chambres 18, en série ou en parallèle, en aval des moyens de prise en charge 14 montés sur la canalisation 12.

Après une exposition suffisante à l'eau provenant du réseau de distribution, via la canalisation et les moyens de prise en charge 14, cette période étant définie par l'utilisateur, et/ou éventuellement par un document informatif, les moyens de capture 22 sont prélevés hors de la chambre 18, par ouverture de l'un au moins des deux raccords 181 et 182, puis on utilise l'élément de capture agissant par sorption 223 pour réaliser l'analyse permettant la détection des molécules responsables des goûts et odeurs de l'eau.

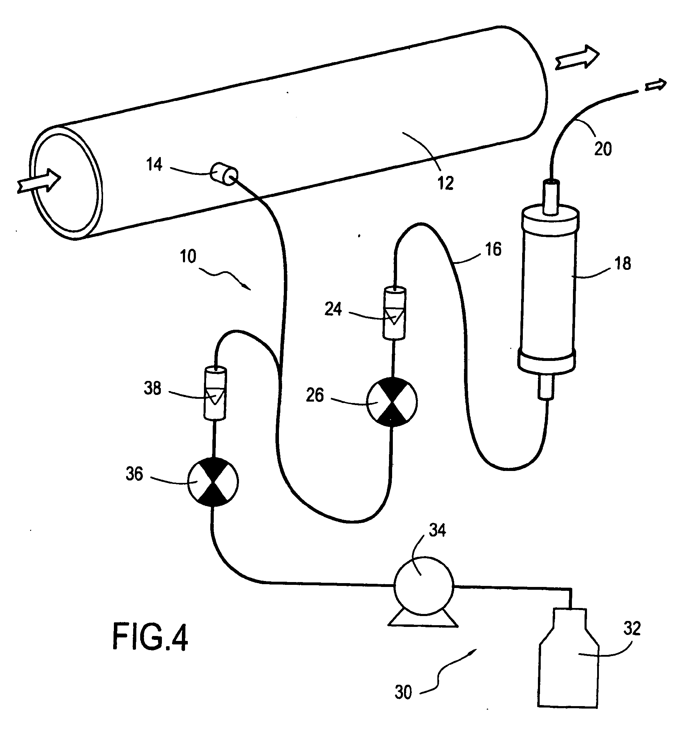

Selon la variante réalisation illustrée sur la figure 4, entre les moyens de prise en charge 14 et la chambre 18, le premier tuyau 16 est équipé d'un débitmètre 24 et d'une vanne 26, et ceci afin de permettre de réaliser la mesure du débit circulant en direction de la chambre 18, tout en permettant de réguler ce débit.

En outre, sur la figure 4, il est prévu un système 30 pour l'injection, en parallèle, dans la chambre 18 d'une solution étalon contenant une concentration connue d'au moins une molécule parfaitement identifiée et absorbable par l'élément de capture agissant par sorption 223. Cette solution étalon est contenue dans un flacon 32 lui-même relié au premier tuyau 16, via une pompe 34 et, éventuellement via une vanne 36 associée à un autre débitmètre 38.

Ainsi, dans ce cas, l'alimentation du dispositif de capture 10 par la solution étalon contenue dans le flacon 32, est réalisée par la pompe 34 fonctionnant à débit constant et qui est réglée en fonction du débit d'alimentation mesurée par le débitmètre 24 situé en amont de la chambre 18, et aussi en fonction de la concentration de la solution étalon.

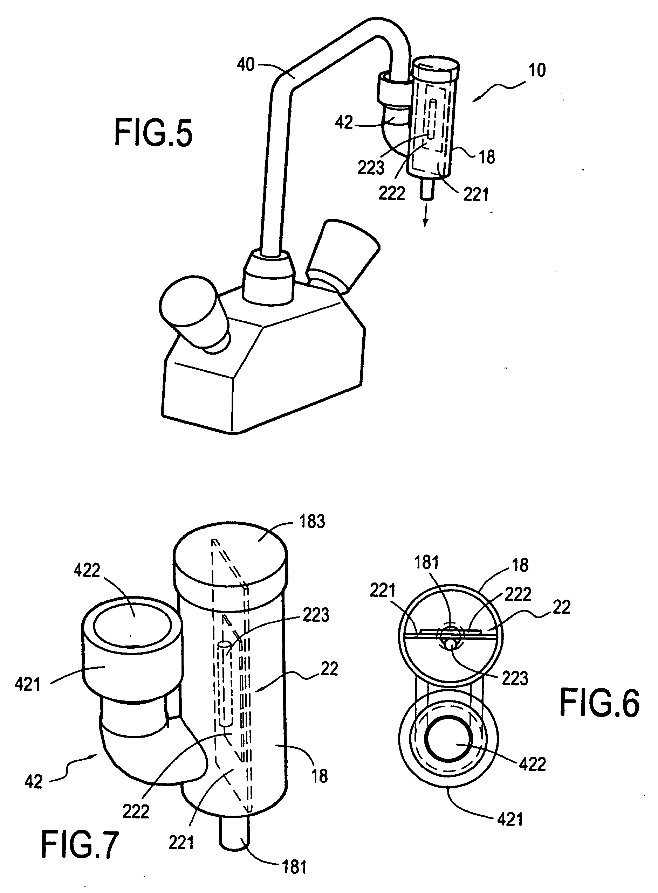

Selon une autre alternative de réalisation, illustrée sur les figures 5 à 7, on peut prévoir de fixer le dispositif 10 directement à l'extrémité d'un robinet 40. Dans ce cas, comme il apparaît plus clairement sur les figures 6 et 7, on utilise, à la place des moyens de prise en charge 14 et du premier tuyau 16, afin de former des moyens de liaison et de connexion hydraulique entre la chambre 18 et une extrémité du robinet 40, un système de fixation rapide 42.

Ce système de fixation rapide 42 est, dans le cas de figure représenté sur les figures 5 à 7, constitué par un embout 421 percé selon un passage coudé 422 à l'entrée duquel peut s'insérer extrémité libre du robinet 40, l'autre extrémité du passage coudé 422 communicant avec l'intérieur de la chambre 18.

Dans ce cas, la chambre 18 est refermée à l'une de ses extrémités (en haut sur la figure 7) par un capuchon étanche 183 remplaçant le raccord étanche 182 de la figure 2, l'autre extrémité de la chambre 18 (en bas sur la figure 7) comportant toujours le raccord étanche 181 qui permet l'évacuation de l'eau ayant transité à l'intérieur de la chambre 18.

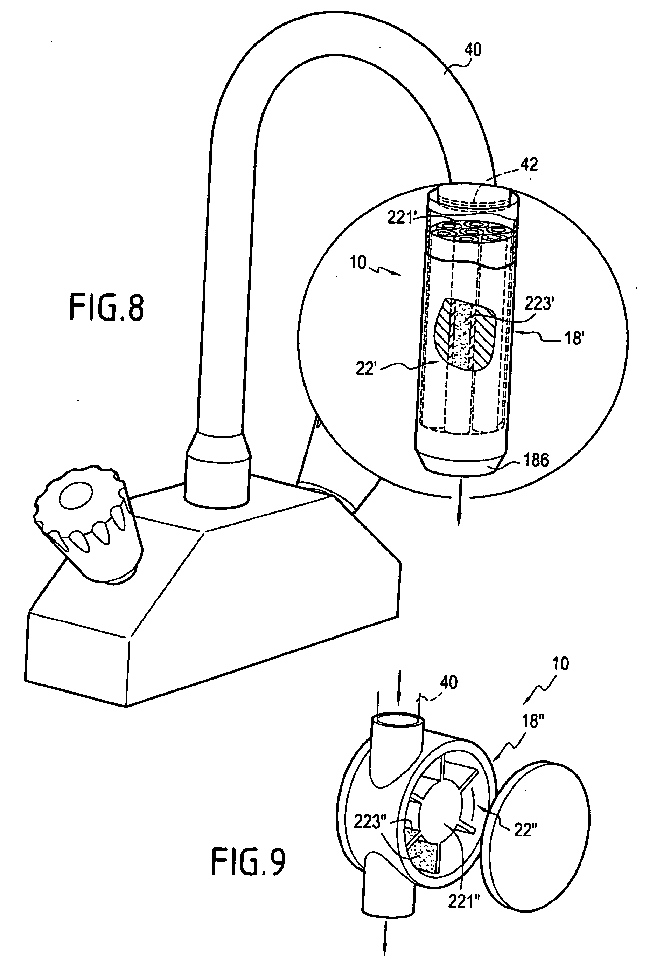

La figure 8 montre une première autre solution de réalisation de la variante illustrée sur les figures 5 à 7 selon laquelle le dispositif 10 est directement à l'extrémité d'un robinet 40. Dans ce cas, le système de fixation rapide 42 est un raccord fileté monté sur la chambre 18' contenant des moyens de capture 22' comprenant un support 221' sous la forme d'un tube de logement muni de plusieurs orifices traversant susceptibles de contenir chacun un élément de capture 223'. Chaque élément de capture 223' est formé d'un tube en verre creux dont la paroi interne est revêtue d'une couche de polydiméthylsiloxane (PDMS) sur laquelle circule une partie du flux de l'eau traversant la chambre 18' à la sortie du robinet 40.

Sur la figure 8 sept tubes creux en verre formant chacun un élément de capture 223' sont logés dans les sept orifices du support 221'. Toutefois, on comprend que l'on peut prévoir un support 221' avec davantage ou moins d'orifices que sept ou encore qu'il suffit qu'au moins l'un de ces orifices du support 221' loge un élément de capture 223' pour assurer la fonction du dispositif 10, à savoir la capture de substances génératrices d'odeurs et/ou de goûts présentes dans l'eau circulant dans le dispositif 10. Sur la figure 8 un brise-jet 186 est situé en partie basse de la chambre 18'.

Selon cette première solution illustrée sur la figure 8, lorsque l'on souhaite caractériser les substances génératrices d'odeurs et/ou de goûts qui ont été collectées sur la couche de polydiméthylsiloxane (PDMS) revêtant la paroi interne des tubes en verre creux formant les éléments de capture 223', il suffit de démonter le support 221' et de retirer au moins l'un des tubes en verre creux formant les éléments de capture 223' avant de procéder à l'analyse.

La figure 9 montre une deuxième autre solution de réalisation de la variante illustrée sur les figures 5 à 7 selon laquelle le dispositif 10 est directement à l'extrémité d'un robinet 40. Comme il apparaît sur la figure 9, la chambre 18" est reliée à l'embout du robinet 40 par un système de fixation rapide 42 adéquat et présente la forme d'un tambour, cette chambre 18" fonctionnant selon le principe du moulin à eau grâce à des moyens de capture 22" qui comprennent :
- un axe matériel de rotation 221" apte à tourner par rapport à la chambre 18" selon une direction orthogonale à celle de l'écoulement de l'eau depuis le robinet 40, en étant excentré par rapport à l'axe de l'écoulement de l'eau hors du robinet 40, et
- des pâles 223" montées sur l'axe matériel de rotation 221" et qui sont recouvertes d'une couche de polydiméthylsiloxane (PDMS) au moins sur la face sur laquelle circule l'eau traversant la chambre 18" à la sortie du robinet 40.

On comprend que l'axe matériel de rotation 221" sert de support aux pâles 223" qui forment elles-mêmes les éléments de capture 223" mobiles agissant par sorption.

Selon cette deuxième solution illustrée sur la figure 9, lorsque l'on souhaite caractériser les substances génératrices d'odeurs et/ou de goûts qui ont été collectées sur la couche de polydiméthylsiloxane (PDMS) revêtant les pâles 223", il suffit de remplacer la chambre 18" par une autre chambre 18" , ou bien on peut prévoir de démonter la chambre 18" et de ne changer soit que l'un ou plusieurs des pâles 223", ou encore l'ensemble formé par le support 221" et les pâles 223".

## Revendications

1. Dispositif (10) pour la capture de substances génératrices d'odeurs et/ou de goûts présentes dans de l'eau circulant en continu dans un réseau de distribution d'eau au niveau d'une canalisation (12), **caractérisé en ce qu'**il comporte :
- des moyens de capture (22 ;22' ;22") desdites substances,
du type agissant par sorption, et comprenant au moins un support (221 ; 221' ; 221") recevant au moins un élément de capture (223 ; 223' ;223") comprenant une couche de polydiméthylsiloxane (223) ;
- au moins une chambre (18 ;18' ;18") contenant les dits moyens de capture (22) et apte à être traversée par la circulation de l'eau du réseau,
- et des moyens de liaison et de connexion hydrauliques (14 ; 42) entre ladite chambre (18 ;18' ;18") et ladite canalisation (12).

2. Dispositif (10) selon la revendication 1, **caractérisé en ce que** ledit support (221) comprend une portion aimantée (222).

3. Dispositif (10) selon l'une quelconque des revendications précédentes, **caractérisé en ce que** les matériaux formant le dispositif (10) ne relarguent pas de composés susceptibles de gêner la capture des molécules odorantes.

4. Dispositif (10) selon l'une quelconque des revendications 1 à 3, **caractérisé en ce que** lesdits moyens de liaison et de connexion hydrauliques comprennent un système de fixation rapide (42) au robinet (40) d'arrivée chez l'utilisateur.

5. Dispositif (10) selon l'une quelconque des revendications 1 à 3, **caractérisé en ce que** lesdits moyens de liaison et de connexion hydrauliques comprennent des moyens de prise en charge (14) entre la canalisation (12) et ladite chambre (18) et des moyens d'évacuation de l'eau (182 ; 20) hors de ladite chambre (18).

6. Dispositif (10) selon la revendication 5, **caractérisé en ce que** lesdits moyens de prise en charge (14) comprennent un robinet ou une vanne.

7. Dispositif (10) selon l'une quelconque des revendications 4 à 6, **caractérisé en ce que** lesdits moyens de prise en charge comprennent un système de fixation amovible, ce par quoi on peut remplacer la chambre (18).

8. Dispositif (10) selon l'une quelconque des revendications précédentes, **caractérisé en ce que** lesdits moyens de liaison et de connexion hydrauliques comprennent un débitmètre (24).

9. Dispositif (10) selon l'une quelconque des revendications précédentes, **caractérisé en ce qu'**il comporte en outre un système (30) permettant d'injecter dans ladite chambre (18), en même temps que l'eau y circule, une solution liquide servant d'étalon.

10. Procédé de capture de substances génératrices d'odeurs et/ou de goûts présentes dans de l'eau circulant en continu dans un réseau de distribution d'eau au niveau d'une canalisation (12), en vue de la caractérisation desdites substances, par le passage de l'eau du réseau dans une chambre (18) contenant des moyens de capture (22) desdites substances, du type agissant par sorption et comprenant au moins un support (221 ; 221' ; 221") recevant au moins un élément de capture (223; 223' ;223") comprenant une couche de polydiméthylsiloxane (223), ladite chambre étant reliée à la canalisation (12) par des moyens de liaison et de connexion hydrauliques (14 ; 42).

11. Procédé selon la revendication 10, **caractérisé en ce que** l'on réalise en outre la mesure et/ou le réglage du débit de l'eau dans la chambre (18).

12. Procédé selon l'une quelconque des revendications 10 à 11, **caractérisé en ce que** l'on réalise en outre, dans ladite chambre (18), en même temps que l'eau y circule, une injection d'une solution liquide servant d'étalon.

13. Procédé selon l'une quelconque des revendications 10 à 12, **caractérisé en ce qu'**il est mis en oeuvre pour un réseau d'eau potable.

## Claims

1. A device (10) for capturing odor- and/or taste-generating substances present in water flowing continuously in a water distribution network via a pipe (12), the device being **characterized in that** it comprises:
- capture means (22; 22'; 22") for capturing said substances of the type acting by sorption and comprising at least one support (221; 221'; 221") receiving at least one capture element (223; 223'; 223") comprising a layer of polydimethylsiloxane (223);
- at least one chamber (18; 18'; 18") containing said capture means (22) and suitable for having network water flow therethrough; and
- hydraulic link and connection means (14; 42) between said chamber (18; 18'; 18") and said pipe (12).

2. A device (10) according to claim 1, **characterized in that** said support (221) includes a magnetic portion (222).

3. A device (10) according to any preceding claim, **characterized in that** the materials forming the device (10) do not give off compounds that could impede the capture of odorous molecules.

4. A device (10) according to any one of claims 1 to 3, **characterized in that** said hydraulic link and connection means comprises a quick-coupling system (42) for coupling to an outlet faucet (40) on user premises.

5. A device (10) according to any one of claims 1 to 3, **characterized in that** said hydraulic link and connection means comprises tapping means (14) between the pipe (12) and said chamber (18), together with means (182; 20) for discharging water from said chamber (18).

6. A device (10) according to claim 5, **characterized in that** said tapping means (14) includes a stop cock or valve.

7. A device (10) according to any one of claims 4 to 6, **characterized in that** said tapping means includes a releasable fastener system enabling the chamber (18) to be replaced.

8. A device (10) according to any preceding claim, **characterized in that** said hydraulic link and connection means includes a flowmeter (24).

9. A device (10) according to any preceding claim, **characterized in that** it further includes a system (30) enabling a liquid solution acting as a standard to be injected into said chamber (18) together with the water flowing therethrough.

10. A method of capturing odor- and/or taste-generating substances present in the water flowing continuously in a water distribution network via a pipe (12), in order to characterize said substances, by passing water from the network through a chamber (18) containing capture means (22) for capturing said substances of the type that act by sorption and comprising at least one support (221; 221'; 221") receiving at least one capture element (223; 223'; 223") comprising a layer of polydimethylsiloxane (223), said chamber being connected to the pipe (12) via hydraulic link and connection means (14; 42).

11. A method according to claim 10, **characterized in that** the flow of water through the chamber (18) is also measured and/or adjusted.

12. A method according to claim 10 or claim 11, **characterized in that** a liquid solution acting as a standard is also injected into said chamber (18) at the same time as water flows therethrough.

13. A method according to any one of claims 10 to 12, **characterized in that** it is implemented for a drinking water network.

## Patentansprüche

1. Vorrichtung (10) zur Erfassung von geruchs- und/oder geschmackserzeugenden Stoffen, die in kontinuierlich in einem Wasserversorgungsnetz zirkulierendem Wasser vorhanden sind, an einer Rohrleitung (12), **dadurch gekennzeichnet, daß** sie aufweist:
- Mittel zur Erfassung (22; 22'; 22") der Stoffe, des Typs, der auf Sorption beruht und mindestens einen Träger (221; 221'; 221") umfaßt, der mindestens ein Erfassungselement (223; 223'; 223") aufnimmt, das eine Schicht Polydimethylsiloxan (223) umfaßt,
- mindestens eine Kammer (18, 18', 18"), welche die Mittel zur Erfassung (22) enthält und geeignet ist, von dem zirkulierenden Wasser des Netzes durchquert zu werden,
- und hydraulische Verbindungs- und Anschlußmittel (14; 42) zwischen der Kammer (18, 18', 18") und der Rohrleitung (12).

2. Vorrichtung (10) nach Anspruch 1, **dadurch gekennzeichnet, daß** der Träger (221) einen magnetisierten Abschnitt (222) umfaßt.

3. Vorrichtung (10) nach einem der vorhergehenden Ansprüche, **dadurch gekennzeichnet, daß** die Materialien, welche die Vorrichtung (10) bilden, keine Verbindungen abgeben, welche die Erfassung der geruchsbildenden Moleküle stören können.

4. Vorrichtung (10) nach einem der Ansprüche 1 bis 3, **dadurch gekennzeichnet, daß** die hydraulischen Verbindungs- und Anschlußmittel ein Schnellbefestigungssystem (42) zur Befestigung am Wasserhahn (40) beim Verbraucher umfassen.

5. Vorrichtung (10) nach einem der Ansprüche 1 bis 3, **dadurch gekennzeichnet, daß** die hydraulischen Verbindungs- und Anschlußmittel Übernahmemittel (14) zwischen der Rohrleitung (12) und der Kammer (18) und Mittel zum Ausleiten (182; 20) des Wassers aus der Kammer (18) umfassen.

6. Vorrichtung (10) nach Anspruch 5, **dadurch gekennzeichnet, daß** die Übernahmemittel (14) einen Hahn oder ein Ventil umfassen.

7. Vorrichtung (10) nach einem der Ansprüche 4 bis 6, **dadurch gekennzeichnet, daß** die Übernahmemittel ein System zur lösbaren Befestigung umfassen, wodurch die Kammer (18) ausgetauscht werden kann.

8. Vorrichtung (10) nach einem der vorhergehenden Ansprüche, **dadurch gekennzeichnet, daß** die hydraulischen Verbindungs- und Anschlußmittel einen Durchflußmengenmesser (24) umfassen.

9. Vorrichtung (10) nach einem der vorhergehenden Ansprüche, **dadurch gekennzeichnet, daß** sie außerdem ein System (30) aufweist, das es ermöglicht, in die Kammer (18) zur gleichen Zeit, zu der dort das Wasser zirkuliert, eine als Vergleichsstandard dienende flüssige Lösung einzuspritzen.

10. Verfahren zur Erfassung von geruchs- und/oder geschmackserzeugenden Stoffen, die in kontinuierlich in einem Wasserversorgungsnetz zirkulierendem Wasser vorhanden sind, an einer Rohrleitung (12) zur Charakterisierung der Stoffe durch das Leiten von Wasser des Netzes in eine Kammer (18), die Mittel zur Erfassung (22) der Stoffe enthält, des Typs, der auf Sorption beruht und mindestens einen Träger (221; 221'; 221 ") umfaßt, der mindestens ein Erfassungselement (223; 223'; 223") aufnimmt, das eine Schicht Polydimethylsiloxan (223) umfaßt, wobei die Kammer mit der Rohrleitung (12) durch hydraulische Verbindungs- und Anschlußmittel (14; 42) verbunden ist.

11. Verfahren nach Anspruch 10, **dadurch gekennzeichnet, daß** außerdem die Messung und/oder die Regelung der Durchflußmenge des Wassers in der Kammer (18) durchgeführt wird.

12. Verfahren nach einem der Ansprüche 10 bis 11, **dadurch gekennzeichnet, daß** außerdem in der Kammer (18) zur gleichen Zeit, zu der dort das Wasser zirkuliert, eine Einspritzung einer als Vergleichsstandard dienenden flüssigen Lösung durchgeführt wird.

13. Verfahren nach einem der Ansprüche 10 bis 12, **dadurch gekennzeichnet, daß** es für ein Trinkwassernetz durchgeführt wird.
